# EUROPEAN PATENT APPLICATION

(11) **EP 2 579 000 A1**
(43) Date of publication of application: **10.04.2013**
(21) Application number: 10852062.8
(22) Date of filing: 27.05.2010
(51) Int. Cl.: G01D 4/00, H02J 9/06, F21S 9/02

(54) **EMERGENCY LIGHT AND SYSTEM FOR REMOTELY CHECKING AND MONITORING WATER METERS**

(71) Applicant: Martinez Suarez, Amador, 48940 Artaza (Vizcaya) (ES)
(72) Inventor: Martinez Suarez, Amador, 48940 Artaza (Vizcaya) (ES)
(74) Representative: Stiebe, Lars Magnus
(86) International application number: PCT/ES2010/070354
(87) International publication number: WO 2011/148003

(57) **Abstract**

The invention relates to an emergency light fixture suitable for being incorporated in a water and/or town gas meter reading system with different levels, and comprising radio frequency means for receiving information from the meters and a memory for storing data from meters and of events, wherein the meters are the lowest level of the system. The light fixture further comprises a radio frequency module, a GPRS module, a LIN module and a PLC module for communication with higher levels of the system, making it compatible with a large number of meters. The invention also relates to a light fixture with a system for cutting off the supply of water and/or town gas when leaks are detected.

## Description

### Field of the Invention

The present invention is applied to meter reading systems. More specifically, it relates to an emergency light fixture suitable for being part of a remote water and/or town gas meter reading system with at least a four-level architecture.

### Background of the Invention

There are water and/or town gas meters reading modules on the market suitable for being part of architectures at several levels which allow instantaneously and remotely reading meters. In known systems, meters send data from the reading of meters by radio frequency to a concentrator module which in turn transmits the readings through GPRS (General Packet Radio Service) to a control system of the water and/or town gas service supply company.

One of the main problems with the system is that it is not universal. There has to be a maximum distance of 100 m between each meter and the concentrator module, so the concentrator must often be installed in basements, for example, but the concentrator requires GPRS coverage, a signal which does not usually reach locations of this type.

Meter reading architectures also have a maintenance problem which entails having many elements inside the building that require individual periodic service.

### Object of the Invention

The object of the invention is to provide an emergency light fixture/system which solves the technical problems described in the preceding section. To that end, the invention proposes an emergency light fixture suitable for being incorporated in a water and/or town gas meter reading system at different levels; and comprising radio frequency means for receiving information from the meters and a memory for storing data from meters and of events, wherein the meters are the lowest level of the system. The light fixture further comprises a radio frequency module, a GPRS module, a LIN module (Local interconnect Network) and a PLC modem module for radio communication with higher levels of the system, making it compatible with an endless number of reading systems.

### Brief Description of the Drawing

For the purpose of aiding to better understand the features of the invention according to preferred practical embodiment, a drawing is attached to the following description in which the following has been depicted with an illustrative character:

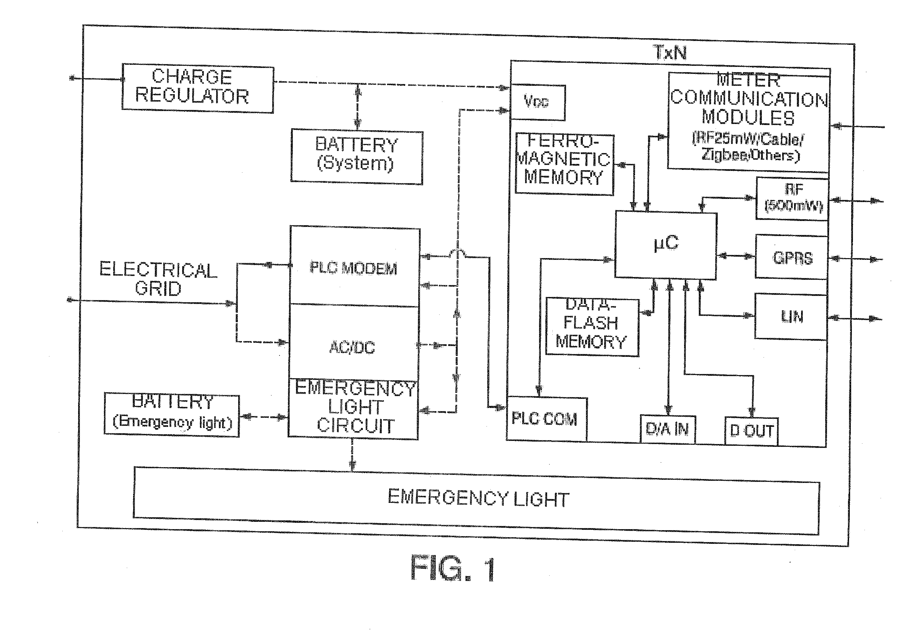

Figure 1 is a diagram which schematically describes the components of the light fixture of the invention.

### Detained Description of the Invention

The invention is applied to a water and/or town gas meter reading system with an up to five-level architecture.

The data control center is the first link of the entire chain of the system. Its functions are indispensable for the operation, maintenance and supervision of the meter network. There may be several control centers, a many as there are client profiles, managers, maintenance companies, by province, etc. Its most remarkable functions are:
- support for the installer of the network infrastructure;
- study of coverage and particularly routing;
- coordination with the installer;
- updating the database with actual readings;
- confirmation of the voltage of the batteries that may be in the meter installation;
- infrastructure maintenance by means of the detection of anomalies and alarms notifying the maintenance company, indicating the action to be performed and the exact location of the meter to be repaired;
- updating the database with user subscriptions, cancellations, bank data, etc.;
- service of calculating leaks, pressures and flow rates, providing consumption data by zones to managers.

The next level would be formed by a data transmission gate (GDT). This gate is the remote access point of the data control center (DCC) and works like a communication gateway with the DCC and the radio network for accessing the meters.

The network allows accessing all the lower level equipment except meters from each GDT, which facilitates the dynamic distribution of the traffic load between near-by gates. The modem used is preferably a GPRS/2.5 G. To allow access, the equipment will publish the IP address assigned by the operator in a database, such that it will not be necessary to use cards with a static IP. To prevent unauthorized access to the network, the connection is through tunnels contracted with operators which ensure that all access is through the DCC, which allows managing the different permissions for accessing the equipment.

The functions of the GDT are:
- establishing communication between the DCC (in GPRS) and the network equipment (in RF);
- processing SMS commands and e-mails generated to configure parts of the equipment;
- controlling alarms of the equipment;
- controlling the date and time;
- requesting the data packets from the next level in real time.

The next level is the data concentrator outside the building (DCB) which is responsible for concentrating data from the meters stored in cabinets and, if there is an internal router, it will tend to the terminals of said router. As will be seen below, this level can also be incorporated in an emergency light fixture and is optional because if there is only one floor in the building, it will not need to be incorporated.

Its location is selected such that it covers signals from the next level with one or several radio frequency gateways. Preferably, the DCB automatically requests from the next level the meter readings on the last day of the month, such that monthly readings from the DCC are facilitated. The DCE can be accessed from the DCC through the GDT and with the possibility of routing through other DCBs or directly by means of mobile terminals.

The assignment of equipment from which each DCB must compile readings is done from the DCC or from mobile terminals.

The basic functions of the DCB are:
- routing radio frames between other devices (except with meters);
- on-demand communication of higher levels with lower level equipment (configuration, isolated readings ...);
- automatic periodic compilation of readings stored in equipment;
- controlling alarms;
- controlling date and time.

The next level, the internal data router (IDR) is incorporated in the light fixture of the invention. The light fixture incorporates, among typical elements, an AC/DC converter, an emergency circuit and an emergency light battery, which maintains the equipment in stand-by in the event of a failure in the electrical grid. The IDR is responsible for allowing access to meters from outside the building or the façade.

The IDR must assure good coverage to go from the equipment of the previous level (DCB) to the next level (which can in turn be incorporated in a light fixture) minimizing the number of jumps and maintaining suitable RRSI in all of them. Its basic functions are:
- routing radio frames between other device (except the meter).
- controlling alarms, date and time of the equipment.

The light fixture further incorporates a microcontroller, a module for communication with meters by radio frequency, and GPRS, LIN (Local Interconnect Network for cable communications) and RF modules for communicating with the high level and a PLC modem for sending data through the electrical grid. The RF module for the meters is preferably a 25 mW module. The light fixture is optionally provided with analog inputs and digital outputs. The memory for storing data from meters, of events and of data and events pertaining to the system is preferably a dataflash memory. The light fixture can alternatively be provided with a redundant ferromagnetic backup memory.

There could optionally be a light fixture in each floor of the building.

The cabinet meter concentrator (CMC) is the second to last level and is located very close to said meters. As in the preceding levels, this level belongs to the infrastructure of the network and has the architecture and topology predefined from the data control center (DCC). The functions of the CMC include:
- routing radio frames between other devices;
- on-demand communication of higher levels with lower level equipment;
- compiling data from the meter readings, which data are stored in a nonvolatile memory and sent on demand to the higher level equipment; each concentrator has a list of meters it is assigned to control which can be automatically updated from the DCC or from a portable terminal;
- retransmitting through the previously configured pathway of the asynchronous alarms received from the meters;
- solenoid outputs controlled by means of commands from the DCC
- controlling alarms, date and time.

The last level of the architecture (level 5) consists of the meters. The meters use RF communications for remote access and are configured to spontaneously send alarms to the higher level equipment indicated.

Controllers are accessed by radio through the network, said controllers being able to be configured and read from both the DCC and mobile terminals.

## Claims

1. Emergency light fixture suitable for being incorporated in a water and/or town gas meter reading system with different levels, the fixture comprising radio frequency means for receiving information from the meters and a memory for storing data from meters and of events, wherein the meters are the lowest level of the system, **characterized in that** it further comprises a radio frequency module, a GPRS module, a LIN module and a PLC module for communication with higher levels of the system.

2. Emergency light fixture according to claim 1, **characterized in that** it further comprises an AC/DC circuit, an emergency circuit and a battery for the emergency light.

3. System for the remote control and monitoring of water and/ or town gas meters located in a building incorporating a light fixture according to claim 1 or 2 and formed by at least four action levels, and wherein a first level is formed by at least one control center, the second level is a data transmission gate, the next level is a data concentrator for concentrating data from meters in the building where the light fixture is located and the last level is the meter itself.

4. System for the remote control and monitoring of meters according to claim 3, **characterized in that** the first level is provided with a user and password authentication program.
